# EUROPEAN PATENT APPLICATION

(11) **EP 4 699 451 A1**
(43) Date of publication of application: **25.02.2026**
(21) Application number: 25173672.4
(22) Date of filing: 30.04.2025
(51) Int. Cl.: A23K 10/20, A01K 15/02, A23K 10/30, A23K 40/20, A23K 40/25, A23K 50/40

(54) **MULTI-LAYER PET CHEW**

(30) Priority: 19.08.2024 US 202418787481
(71) Applicant: The Full Life Company, LLC, Phoenix Arizona 85012 (US)
(72) Inventor: Eller, Scott, Phonix, 85003 (US); Levy, William, Fountain Hills, 85268 (US); Flores, Caryn, Cave Creek, 85331 (US)
(74) Representative: Aldridge, Christopher Simon

(57) **Abstract**

A pet chew having an innermost core composed of one or both of edible meat and plant-based material, a middle member surrounding the innermost core and composed of a hardened non-consumable composite material, and an outermost layer surrounding the middle member and composed of one or both of edible meat and plant-based material.

## Description

### FIELD:

The present invention is related to pet chews, specifically treats given to pets... usually to dogs, which are intended to be chewed to both enhance dental health, provide nutrition, and to occupy and entertain the animal for an extended time.

### BACKGROUND

Owners generally provide pet chews to their dogs not only for their health benefits, but also to entertain the dogs and allow the owner to attend to other activities without being pestered. But prior art dog chews suffer from several deficiencies.

While real animal bones are the natural and ultimate chew for a dog in terms of flavor, nutrition, and chew time, they pose numerous risks. For one thing, the meat and marrow that the dog craves and that ideally provide nutrition are prone to spoiling and becoming an ingestion risk. And the hard bones that increase chew times can become brittle and the resulting sharp shards can risk injury, choking, and digestive issues. Such bones can also be or become unhygienic and ill-smelling, and are too messy to be used indoors.

Chews made of rawhide have become the standard replacement for natural animal bones, but research is proving that the rawhide has more negative health effects than even spoiled bones. While rawhide has a long chew time, it is unhealthful to pets when ingested in quantity and it is often impregnated with unhealth chemicals in the manufacturing process that may lead to long-term health problems.

While plant-based materials are healthier, treats made purely thereof have shorter chew times and provide less jaw exercise and gum treatment. There are composite materials of animal meat and byproducts, but such have the same deficiencies in chews made entirely thereof. Dogs too easily break apart chews made wholly of such plant-based or composite animal-based materials and swallow the chunks in a few moments. Manufactures have to date been unable to replicate the texture, longevity, and function of animal meat and rawhide in chews made of plant-based and composite animal-based materials.

Hardened composites and polymers such as edible nylon have become somewhat common, but while those may simulate the texture and longevity of real animal bone, they are less flavorful and therefore less attractive to the dog. Dogs tend to tire of them and the home soon becomes littered with partially chewed remnants.

It can therefore be appreciated that prior art dog chews tend to be consumed too quickly if made appetizing enough and with sufficient bone-like texture to entice the dog, or tend to be ignored or abandoned if not made appetizing and sufficiently approximating the experience of real animal bones. Flavorful materials tend to cause overly aggressive consumption, and reduced entertainment times. Longer-lasting materials tend to be unattractive to the dog and result in reduced entertainment times.

There is the need, and it may be an objective of the invention, to reduce the potentially adverse health effects of the various materials used in such chews to date. There is also the need, and it may be an additional objective of the invention, to enhance the nutritional benefits of such chews. There is the additional need, and it may be an additional objective of the invention, to provide chews that are long lasting while reducing the potentially adverse health effects and enhancing the nutritional benefits of such chews. There is the additional need, and it may be an additional objective of the invention, to provide chews having such benefits while reducing the potentially adverse effects of the various traditional materials. There is also the need, and it may be an additional objective of the invention, to provide longer lasting dog chews which are attractive and flavorful to the dog so that entertainment time is increased.

Further needs and objectives will become apparent upon perusal of the disclosure herein.

### SUMMARY;

The exemplary chew disclosed herein is composed of a mixture of materials utilizing multiple injection molding and extrusion techniques and using a combination of materials in a structural arrangement that mimics fresh and natural animal bones. The materials are arranged in layers that prolong flavor and chew time while reducing potentially unhealthful effects, and do this in a way that mimics the structure of animal bones. By simulating animal bones in flavor, texture, and structure, the chews are made more attractive to dogs and increase chew time without the risks of real animal bones or rawhide.

The invention may be embodied by or practiced in a chew having layers of the various materials. The layers may be arranged strategically to provide certain initial benefits and certain delayed benefits and to simulate the experience of chewing natural animal bones.

The dog is first presented with an outer layer that simulates the meaty other portion of a real bone and causes aggressive chewing through the layer and into a harder material that simulates bone. This aggressive chewing excites the dog's natural chewing instinct which provides gum massage and stimulation and leads the dog to crave the softer inner marrow of real bones. Ultimately, the chewing exposes more and more of an inner core that simulates that marrow and keeps the dog chewing for times far exceeding those of other dog chews

The innermost core may be composed of an edible meat and/or plant-based material. The outermost layer may be composed of the same or a different material. Because both the core and outer layer are not the main factors in extending the chew's lifetime, the temporariness of plant based material is not the problem that it is in a chew made solely thereof. As long as the outer layer is sufficiently flavorful enough to convince the dog to begin chewing, it has served its task even that layer if short-lived. And as long as the inner core is flavorful and difficult to reach, it will have a long life even though made of a usually short-live material. A middle member is preferably made a hardened non-consumable composite material meant to mimic bone and thereby elongate standard chew time.

As the term is used herein both in this specification and in the appended Claims, "dog-bone shaped" is intended as the shape defined at en.wiktionary.org/wiki/dog_bone; "A 2- or 3-dimensional compound shape, evocative of a dog biscuit or dog-bone toy with a central shaft and two lobes (analogous to femoral condyles) at each end."

As the terms are used herein both in this specification and in the appended claims, over-molding is a multi-step injection molding process wherein two or more components are molded over top of oneanother, and insert-molding is a form of injection molding where a secondary part is formed over a substrate. The differentiating factor between insert-molding and over-molding is that insert-molding is performed with a pre-existing substrate (base or inner component). A prefabricated part (often produced in a completely different facility or procured from another company) is inserted into a mold, and then a secondary layer is formed around or within it. Over-molding is sometimes referred to as two-shot molding because it is a two-step process. Descriptions of over-molding and insert-molding are provided at formlabs.com/blog/overmolding-insert-molding, the entire disclosure therein being incorporated herein by reference.

Further features of the invention will become apparent upon perusal of the disclosure herein.

### BRIEF DESCRIPTION OF THE DRAWINGS;

Fig. 1 is a top view of a pet chew according to a first exemplary embodiment;
Fig. 2 is a front of the pet chew of Fig. 1;
Fig. 3 is a perspective view of the pet chew of Fig. 1;
Fig. 4 is a cross-sectional perspective view of the pet chew of Fig. 1, taken at Line 4-4 of Fig. 2;
Fig. 5 is a top view of the middle member of the pet chew of Fig. 1;
Fig. 6 is a cross-sectional front view of the middle member of Fig. 5, taken at Line 6-6 of Fig. 5;
Fig. 7 is an end view of the middle member of Fig. 5;
Fig. 8 is a perspective view of the middle member of Fig. 5; and
Fig. 9 is a perspective view of the inner core of the pet chew of Fig. 1.

### DESCRIPTION OF EXEMPLARY EMBODIMENTS;

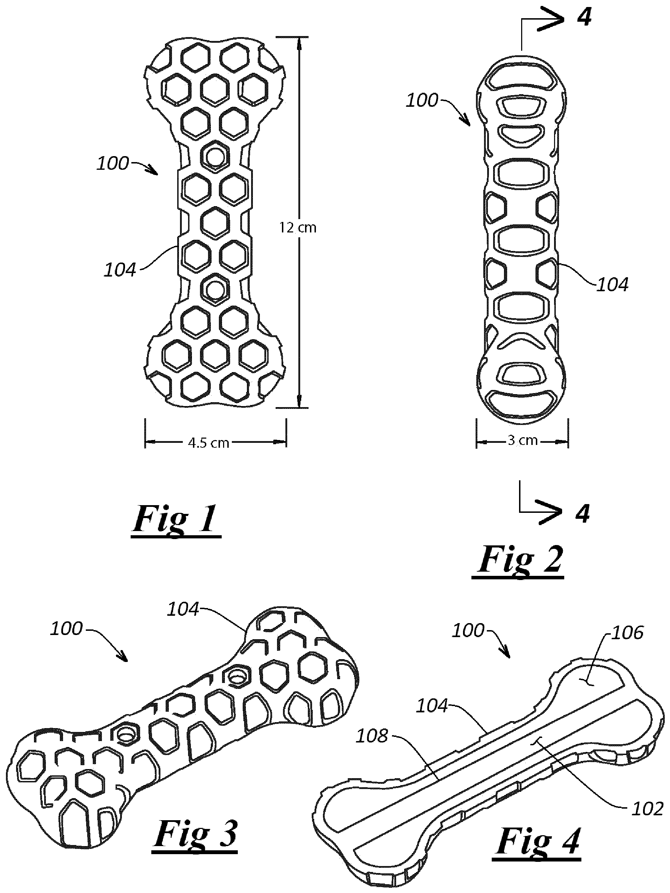

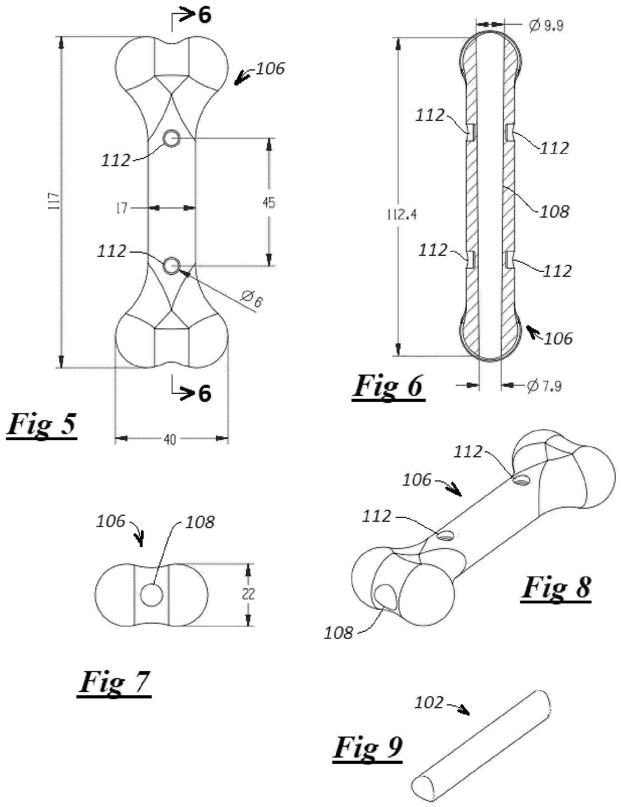

Referring to Figures 1 through 9, an exemplary mixed-material dog chew 100 is shown having layers formed utilizing multiple injection molding techniques. The innermost core 102 is comprised of a first edible material. The outermost layer 104 is comprised of a second edible material which may differ or be the same as the material of the core. The middle member 106 is composed of a hardened nonconsumable polymer, such as non-toxic nylon . The first and second edible materials are preferably meat and/or plant-based, such as chicken and/or plant starch (like potato or pea). The edible materials are preferably treated with a flavoring. Preferably, the outer layer is treated to simulate the taste of meat and the core is treated to simulate the taste of marrow.

The middle member is first made by injection molding. It is made in a dog-bone shape and has a hollow inner chamber 108 and several indentations 112. The inner core is then either molded into the inner chamber by one of insert or over molding, or is extruded there-into. The inner core material is initially hot and somewhat fluid when inserted and becomes hard as it cools, but may alternatively cure from a morefluid state to a more solid state in time, or may be soft and moist when inserted and then harden as it dries over time.

The outer layer is molded around the middle member by a secondary molding operation such as over-molding or insert-molding. The outer layer material is also initially hot and somewhat fluid when molded and becomes hard as it cools, but also may alternatively cure from a more-fluid state to a more solid state in time, or may be soft and moist when inserted and then harden as it dries over time. The outer layer material fills the indentations to improve and maximize adherence to the middle member.

When presented to the dog, the scent of the flavoring in the outer layer attracts the dog to take and taste the chew, then to start gnawing on the outer layer. Because the outer layers is sufficiently adhered to the middle member, the dog is unable to strip the outer layer from the middle member and must gnaw through the outer layer until reaching the middle member in areas around the chew. The chew will be reduced to a partially exposed inner member covered in-part by the remains of the outer layer the same way that an animal bone will be reduced to a partially exposed bone covered partially by the remains of flesh. This removal of flesh from a fresh animal bone to reach the bone causes the dog to feel more like it is chewing on a real bone. The dog's natural chewing instinct is excited, so it continues to chew, cleaning its teeth and massaging its gums. The texture and consistency of the middle member is such that it can only be minimally chipped and its mass is only removed gradually. Eventually the dog will chew the bone with enough force/consistency to partially expose the inner core and to weaken and loosen the hold of the inner core to the inner chamber, allowing the inner core to be removed bit by bit, chewed, and consumed. This further excites the dog's appetite the way that chewing through and into the marrow of an animal bone does. The dog will not stop chewing from this point until the entire inner core has been consumed, which requires time because the core can only be reached in bits by weakening the hold created by the middle member or pulling it out with the dog's teeth. The "reward" of the inner core becomes a familiar goal to the dog and the eager dog especially recognizes these chews for that reason the next time one is offered.

While the forgoing provides an exemplary embodiment is meant to demonstrate key aspects and advantages of the invention, it should be understood that the invention is not meant to be limited thereto. For instance, the dimensions provided in the Figures are merely exemplary but not limiting. The invention should be limited only by the following claims, including all equivalents thereto.

## Claims

1. A pet chew comprising:
an innermost core composed of one or both of edible meat and plant-based material;
a middle member surrounding the innermost core and composed of a hardened non-consumable composite material; and
an outermost layer surrounding the middle member and composed of one or both of edible meat and plant-based material

2. The pet chew of claim 1, wherein the middle member has a longitudinally hollow center and the innermost core is disposed there-within.

3. The pet chew of claim 1 or claim 2 wherein the middle member is formed by injection molding.

4. The pet chew of any preceding claim, wherein the outermost layer is of a substantially consistent thickness that conforms around and to the middle member.

5. The pet chew of any preceding claim, wherein the innermost core is formed by one of secondary molding or extrusion into the hollow center.

6. The pet chew of claim 5 wherein the innermost core is soft and fluid when being formed into the hollow center and then becomes harder and less fluid.

7. The pet chew of any preceding claim, wherein the outermost layer is formed by secondary molding around the middle member.

8. The pet chew of claim 7 wherein the outermost layer is soft and fluid when being formed around the middle member and then becomes harder and less fluid.

9. A pet chew according to any preceding claim, wherein the pet chew is a dog-bone shaped pet chew, and wherein the middle member has a first dog-bone shape.

10. The dog-bone shaped pet chew of claim 9 such that the outermost layer has a second dog-bone shape larger than the first dog-bone shape.

11. A pet chew comprising:
an inner member composed of a hardened non-consumable composite material; and
an outermost layer surrounding the middle member and composed of one or both of edible meat and plant-based material.

12. The pet chew of claim 11, wherein the inner member is formed by injection molding.

13. The pet chew of claim 11 or claim 12, wherein the outermost layer is of a substantially consistent thickness that conforms around and to the inner member.

14. The pet chew of any one of claims 11 to 13, wherein the outermost layer is formed by secondary molding around the inner member.

15. The pet chew of any one of claims 11 to 14, wherein the outermost layer is soft and fluid when being formed around the inner member and then becomes harder and less fluid.
